Europäisches Patentamt

European Patent Office

Office européen des brevets

(11) Veröffentlichungsnummer: **0 312 791**
**A2**

(12) **EUROPÄISCHE PATENTANMELDUNG**

(21) Anmeldenummer: **88115518.8**

(22) Anmeldetag: **22.09.88**

(51) Int. Cl.⁴: **B60R 13/06 , E06B 7/23**

(30) Priorität: **17.10.87 DE 3735248**

(43) Veröffentlichungstag der Anmeldung:
**26.04.89 Patentblatt 89/17**

(84) Benannte Vertragsstaaten:
**AT BE CH ES FR GB GR IT LI LU NL SE**

(71) Anmelder: **Continental AG**
**Königsworther Platz 1 Postfach 1 69**
**D-3000 Hannover 1(DE)**

(72) Erfinder: **Hermann, Dietmar**
**Kantstrasse 7**
**D-3008 Garbsen 6(DE)**
Erfinder: **Bethge, Michael**
**Marienbaderstrasse 3**
**D-3000 Hannover 71(DE)**

(74) Vertreter: **Schneider, Egon**
**Königsworther Platz 1**
**D-3000 Hannover 1(DE)**

(54) **Dichtungsprofil aus Gummi oder gummiähnlichem Kunststoff.**

(57) Das erfindungsgemäße Dichtungsprofil (1) wird an der Fahrzeugkarosserie angeordnet und ist insbesondere zum Abdichten von Türseitenscheiben vorgesehen. Durch einen unter Druck setzbaren bzw. aufblasbaren Hohlraum (5) umfaßt das Dichtungsprofil (1) auch den fahrzeugaußenseitig liegenden Randbereich der Seitenscheiben 7.

FIG.2

EP 0 312 791 A2

## Dichtungsprofil aus Gummi oder gummiähnlichem Kunststoff

Die Erfindung betrifft ein an einer verschließbaren Öffnung einer Kraftfahrzeugkarosserie anzuordnendes Dichtungsprofil aus Gummi oder gummiähnlichem Kunststoff zum Abdichten von Fenstern, insbesondere von Türseitenscheiben, gegenüber der Öffnung an der Fahrzeugkarosserie, mit einem elastisch nachgiebigen Dichtbereich und einem unter Druck setzbaren bzw. evakuierbaren Hohlraum.

Bei den üblicherweise an der Fahrzeugkarosserie, beispielsweise der Türöffnung, angebrachten Dichtungsprofilen legt sich der freie Randbereich der Seitenscheibe von außen an den elastisch nachgiebig ausgebildeten Dichtbereich an. Bekannte Ausführungen derartiger Dichtungsprofile sind dabei teilweise schlauchförmig gestaltet oder aus einem weichen Gummi oder Kunststoff gefertigt. Bei mit derartigen Dichtungsprofilen abgedichteten Seitenscheiben neigen letztere bei höheren Fahrzeuggeschwindigkeiten zum Flattern. Auch können, insbesondere bei schlechten Straßenverhältnissen, unangenehme Klappergeräusche auftreten. Ferner sind die bekannten Dichtungsprofile nicht immer in der Lage, die bei einer Serienfertigung unvermeidlichen Toleranzen der Abmessungen von Fensterscheiben und Dichtung optimal auszugleichen, so daß nicht im erwünschten Ausmaß gewährleistet ist, daß die Scheibenränder allseitig gegen das Eindringen von Wasser, Staub oder Zugluft gesichert sind.

In der DE-OS 30 46 459 ist ein Dichtungsprofil vorgeschlagen, bei dem die genannten Nachteile teilweise nicht mehr gegeben sind. Dieses bekannte Dichtungsprofil besteht im wesentlichen aus einem aus Gummi oder Kunststoff gefertigten Hohlkörper, an welchem die Seitenscheibe einer Kraftfahrzeugtür federnd zur Anlage kommt. Während der Kraftfahrzeugbewegung wird nun Luft durch eine Öffnung in einer Zuführleitung zum Hohlkörper gedrückt, wodurch der Luftdruck im Hohlkörper ansteigt. Diese Druckerhöhung hat die Wirkung, daß der Hohlkörper sich ausdehnt und dadurch in festere Anlage an das Fenster kommt. Somit kann bei höheren Fahrzeuggeschwindigkeiten ein Flattern der Seitenscheiben herabgesetzt werden.

Der Erfindung hat sich nun die Aufgabe gestellt, ein Dichtungsprofil der eingangs genannten Art so zu gestalten, daß nicht nur das Flattern bzw. Wandern von Schiebefenstern bei höheren Geschwindigkeiten verhindert wird, sondern es soll auch eine einwandfreie Dichtwirkung bei größeren Spalttoleranzen erzielbar sein. Ferner sollen unangenehme Klappergeräusche auch bei niedrigeren Geschwindigkeiten vermieden werden können.

Gelöst wird die gestellte Aufgabe erfindungsgemäß dadurch, daß ein den Hohlraum außenseitig begrenzendes Dicht- und Stützelement vorgesehen ist, welches bei unter Druck gesetztem Hohlraum den Randbereich des Schiebefensters fahrzeugaußenseitig umfaßt.

Das erfindungsgemäße Dichtungsprofil erfüllt somit nicht nur eine Abdichtungsfunktion, sondern es wird durch das Umschließen des Randbereichs durch den unter Druck gesetzten Hohlraum die Scheibe gleichzeitig festgehalten und gegen den elastisch nachgiebigen Dichtbereich gedrückt, so daß die genannten Nachteile bekannter Dichtungsprofile, wie ein Flattern der Scheiben bei höheren Geschwindigkeiten sowie Klappergeräusche nicht mehr auftreten. Hierzu ist es nicht erforderlich, sämtliche freien Randbereiche des Schiebefensters bzw. der Seitenscheibe mit einem erfindungsgemäß ausgestalteten Dichtungsprofil zu halten bzw. abzudichten, vielmehr ist auch eine Anordnung des Dichtungsprofiles beispielsweise nur an der dem Fahrzeugdach benachbarten Rahmenseite denkbar. Von Vorteil ist es ferner, daß das erfindungsgemäße Dichtungsprofil die erwähnten fertigungstechnisch kaum vermeidbaren Toleranzen sehr gut auszugleichen vermag. Ist die Haltefunktion des Dichtungsprofiles durch Ablassen des Überdruckes aufgehoben, so sind vorteilhafterweise die zum Bewegen den Fensterscheibe - insbesondere eines Schiebefensters - erforderliche Kräfte gering.

In einer bevorzugten Ausführungsform der Erfindung ist bei aufgehobener Haltefunktion das Dicht- und Stützelement in das Innere des Hohlraumes eingezogen, wobei der Hohlraum unter Normaldruck steht. Wird daher das Dichtungsprofil zum Abdichten und Halten der Seitenscheiben von Fahrzeugtüren verwendet, so ist hierdurch ein problemloses Öffnen und Schließen der Fahrzeugtür gewährleistet, und zwar auch bei einem Ausfall des Druckluftsystems.

Zur elastisch nachgiebigen Abstützung des der Fahrzeuginnenseite zugewandten Randbereiches des Schiebefensters ist es von Vorteil, wenn im Dichtbereich des Dichtungsprofiles ein weiterer Hohlraum vorgesehen ist, der ebenfalls an das Druckluftsystem angeschlossen sein kann.

Das erfindungsgemäße Dichtungsprofil ist insbesondere zum Abdichten und Festhalten der Seitenscheiben von Fahrzeugtüren vorgesehen, die keinen kompletten Rahmen zur Führung und Halterung der Seitenscheiben aufweisen. Demnach wird das Dichtungsprofil karosserieseitig am Türrahmen zumindest an einer Rahmenseite, insbesondere an der dem Fahrzeugdach zugeordneten Rahmenseite, angebracht. Selbstverständlich können auch weitere Türrahmenseiten zumindest teilweise, vor allem dort, wo die bewegliche Seitenscheibe abgedichtet werden soll, mit einem Dichtungsprofil gemäß der Erfindung versehen werden. Beliebige Kombinationen dieses Dichtungsprofiles mit bekannten anderen Dichtungskonstruktionen sind ohne weiteres möglich.

Weitere Merkmale, Vorteile und Einzelheiten der Erfindung werden nun anhand der Zeichnung, die ein Ausführungsbeispiel des erfindungsgemäßen Dichtungsprofiles darstellt, näher beschrieben. Hierbei zeigt

Fig. 1 das Dichtungsprofil im Querschnitt in seiner nicht aktiven Lage,

Fig. 2 das Dichtungsprofil ebenfalls im Querschnitt, jedoch in seiner aktiven, dichtenden und die anliegende Fensterscheibe fixierenden Lage.

Das aus Gummi oder Kunststoff bestehende Dichtungsprofil 1 wird fahrzeugseitig in der Türöffnung durch geeignete Mittel gehalten. Beim darge-stellten Ausführungsbeispiel weist das Dichtungs-profil 1 einen Fußbereich 2 auf, der in einer Aufnahmenut 3 eines mit dem Fahrzeug fest verbundenen Teiles eingeklemmt wird.

Abgesehen vom Fußbereich 2 ist das Dichtungsprofil 1 mit einem Dichtbereich 4 zur elastisch nachgiebigen Abstützung des der Fahrzeuginnen-seite zugewandten Scheibenrandbereiches verse-hen. Im Dichtbereich 4 ist ein Hohlraum 8 ausgebildet. Ferner weist das Dichtungsprofil 1 einen über seine gesamte Länge verlaufenden weiteren Hohl-raum 5 auf. Dieser Hohlraum 5 ist außenseitig von einem flexiblen Dicht- und Stützelement 6 von gleichbleibender Dicke begrenzt.

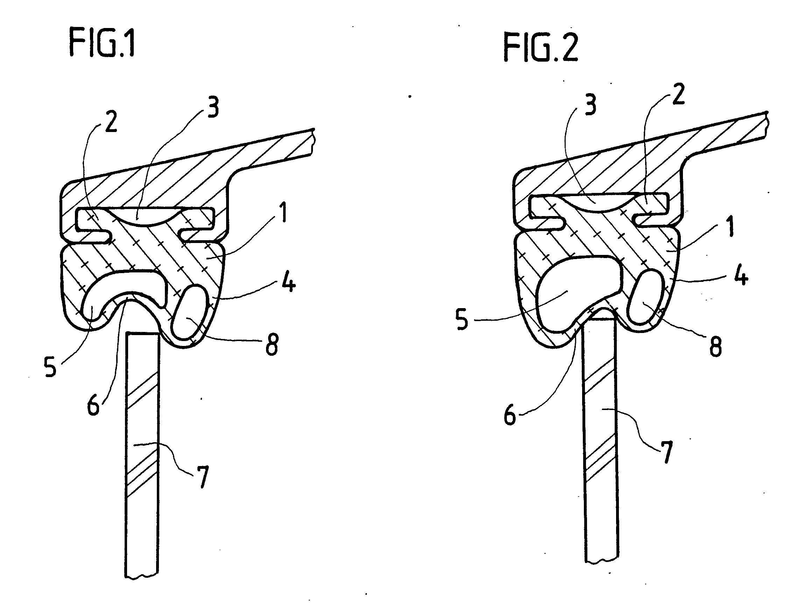

Die Anordnung des Dichtungsprofiles 1 am Fahrzeug ist nun so zu treffen, daß das Dicht- und Stützelement 6 bei geschlossener Tür der Stirnfläche bzw. den Stirnflächen der Seitenscheibe 7 zugewandt ist. In der nicht aktiven Lage gemäß Fig. 1 ist das Dicht- und Stützelement 6 in den Hohlraum 5 eingezogen, wobei im Hohlraum 5 entweder ein geringer Unterdruck von beispielsweise 0,5 bar, vorzugsweise aber normaler Luftdruck herrscht.Wie Fig. 1 zeigt, läßt sich daher die Fahrzeugtür bei geschlossener Seitenscheibe 7 problemlos öffnen und schließen.

Befindet sich die Seitenscheibe 7 bei geschlossener Fahrzeugtür in ihrer obersten - d.h. geschlossenen - Stellung, so soll das Dichtungsprofil 1 seine Dicht- und Stützfunktion ausüben. Hierzu ist es erforderlich, den Hohlraum 5 aufzublasen, also unter einen höheren Druck zu setzen. Das Erzeu-gen einer Druckdifferenz von 0,5 bar gegenüber dem ursprünglich herrschenden Innendruck ist ausreichend. Hierbei umschließt das Dicht- bzw. Stützelement 6 fahrzeugaußenseitig den Randbereich der Seitenscheibe 7. Fahrzeuginnenseitig wird die Seitenscheibe 7 gegen den Dichtbereich 4 des Dichtungsprofiles 1 gedrückt.

Dadurch, daß das Dichtungsprofil 1 den Schei-benrand fahrzeugaußenseitig unter Druck um-schließt, wird die Seitenscheibe 7 so festgehalten, daß ein Ausweichen der Scheibe in Richtung ihrer Flächennormale bei hohen Fahrzeuggeschwindigkeiten unterbunden wird. Damit werden auch als unangenehm empfundene Klappergeräusche vermieden. Das erfindungsgemäße Dichtungsprofil 1 gleicht außerdem die fertigungstechnisch kaum vermeidbaren Toleranzen besser aus als herkömmliche Konstruktionen.

Die Haltefunktion des Dichtungsprofiles 1 wird jeweils dann aufgehoben, wenn die Fahrzeugtür geöffnet bzw. geschlossen oder die Seitenscheibe zum Öffnen oder Schließen betätigt werden soll. Hierbei bietet sich zum Erzeugen von Unter- bzw. Überdruck im Hohlraum 5 des Dichtungsprofiles 1 etwa ein entsprechendes Zusammenwirken mit ei-ner zentralen, pneumatisch betätigten Turverriege-lung an. Zum Öffnen und Schließen der Seitenscheiben kann ein gleichzeitiges Erzeugen von Über- bzw. Unterdruck zusammen mit einer elektrischen Fensterhebevorrichtung vorgesehen werden. Jedenfalls steht dem Fachmann eine Anzahl von technisch machbaren Betätigungsmechanismen zur Verfügung.

Selbstverständlich ist es möglich, zur Verankerung des Dichtungsprofiles am Fahrzeug von der dargestellten Ausführungsform abweichende Maßnahmen, etwa einen anders gestalteten Fußbereich, auszuwählen.

## Ansprüche

1. Ein an einer abschließbaren Öffnung einer Kraftfahrzeugkarosserie anzuordnendes Dichtungsprofil aus Gummi oder gummiähnlichem Kunststoff zum Abdichten von Fenstern, insbesondere von Türseitenscheiben, gegenüber der Öffnung an der Fahrzeugkarosserie, mit einem elastisch nachgiebigen Dichtbereich und einem unter Druck setzbaren bzw. evakuierbaren Hohlraum, dadurch gekennzeichnet, daß ein den Hohlraum (5) außenseitig begrenzendes Dicht- und Stützelement (6) vorgesehen ist, welches bei unter Druck gesetztem Hohlraum (5) den Randbereich des Schiebefensters (7) fahrzeugaußenseitig umfaßt.

2. Dichtungsprofil nach Anspruch 1, dadurch gekennzeichnet, daß das Dicht- und Stützelement (6) bei unter Normaldruck oder geringem Unterdruck stehendem Hohlraum (5) in den Hohlraum (5) eingezogen ist.

3. Dichtungsprofil nach Anspruch 1 oder 2, dadurch gekennzeichnet, daß im Dichtbereich (4) ein weiterer Hohlraum (8) vorgesehen ist.

FIG.1

FIG.2